# EUROPEAN PATENT APPLICATION

(11) **EP 4 576 127 A1**
(43) Date of publication of application: **25.06.2025**
(21) Application number: 23218752.6
(22) Date of filing: 20.12.2023
(51) Int. Cl.: H01B 13/26, B32B 27/00

(54) **A POWER CABLE**

(71) Applicant: NKT HV Cables AB, 371 60 Lyckeby (SE)
(72) Inventor: FRIBERG, Peter, Rödeby (SE)
(74) Representative: Kransell & Wennborg KB

(57) **Abstract**

A power cable (1) comprising: a conductor (2, 201), an insulation system (5) arranged around the conductor (2, 201), a tape arrangement (30, 130) forming an interface between the conductor (2, 201) and the insulation system (5), the tape arrangement (30, 130) having one or several layers (32, 34, 132) of which a first layer (32, 132) has an inner facing surface (32a, 132a) arranged to face the conductor (2, 201), wherein the inner facing surface (32a, 132a) of the first layer (32, 132) of the tape arrangement (30, 130) is coated with friction enhancing material (33, 133).

## Description

### TECHNICAL FIELD

The present disclosure generally relates to a power cable and a power cable comprising a tape arrangement having a friction enhancing material coating.

### BACKGROUND

Power cables typically comprise a conductor covered by an insulation system including e.g. a semiconductive layer and an insulation layer. The insulation system may move axially relative to the conductor due to thermal shrinkage, especially close to the cable ends or at a rigid joint close to the conductor joint. As a result, a portion of the conductor may thus become exposed, i.e., without the surrounding insulation system. The length of exposed conductor is called shrink back. The shrink back typically reaches a steady state after a number of heat cycles.

There are several ways to reduce shrink back. For example, the connection sleeve of a rigid joint and the end portion of the insulation system adjacent to the connection sleeve may be provided with a respective circumferential groove interlocked by means of an anchoring element as disclosed by EP1158638. Nevertheless, it would be desirable to provide alternative means for reducing shrink back or axial movement of the insulation system relative to the conductor.

### SUMMARY

A general object of the present disclosure is to provide a power cable that solves or at least mitigates the problems of the prior art.

According to a first aspect, there is hence provided a power cable comprising: a conductor, an insulation system arranged around the conductor, a tape arrangement forming an interface between the conductor and the insulation system, the tape arrangement having one or several layers of which a first layer has an inner facing surface arranged to face the conductor, wherein the inner facing surface of the first layer of the tape arrangement is coated with friction enhancing material.

Due to the friction enhancing material, the friction between the conductor, such as an outer facing surface of the conductor, and the tape arrangement can be adapted, and increased compared to having a tape arrangement without such friction enhancing material coating. Hereby, shrink back may be reduced. In other words, axial shrinkage forces may be better taken care of. The friction enhancing material provides a good grip of the conductor. In other words, the coated inner facing surface of the first layer of the tape arrangement reduces the shrink back of the insulation system arranged around the conductor. Hereby, risk of failures due to shrink back of the insulation system is reduced.

In other words, the friction enhancing material coating is arranged in contact with the conductor, such as an outside or outer facing surface of the conductor. The one or several layers of the tape arrangement is/are to be understood as arranged around the conductor. The friction enhancing material may be coated on the whole of the inner facing surface, or be coated on only a portion of the inner facing surface. According to one embodiment, the friction enhancing material is coated on a majority, such as over at least 50 %, of the inner facing surface. The friction enhancing material coating may form a part of, or at least a part of, the inner facing surface. In other words, the friction enhancing material coating may be comprised in the first layer. The friction enhancing material may form, or form at least a part of, the inner facing surface of the first layer. Thus, the inner facing surface with the friction enhancing coating may be arranged in contact with the conductor. As an alternative, the friction enhancing material coating may form a separate layer and be arranged to cover, or at least partly cover, the inner facing surface of the first layer. Thus, the coating may be formed as a separate layer to the first layer, or as forming a part of the first layer.

According to one embodiment, the first layer of the tape arrangement is an innermost layer of the tape arrangement. Hereby, the innermost layer of the tape arrangement is coated with the friction enhancing material. According to one embodiment, the first layer of the tape arrangement is a single layer of the tape arrangement, wherein the single layer is coated with friction enhancing material.

According to one embodiment, the tape arrangement comprises a winding layer arranged helically around the conductor. Thus, the winding layer is arranged around the conductor in a helical arrangement. The winding layer may e.g. be the previously mentioned first layer, the innermost layer or the single layer of the tape arrangement.

According to one embodiment, the tape arrangement comprises a longitudinally arranged layer arranged along the longitudinal axis of the conductor. The longitudinal layer may e.g. be the previously mentioned first layer, the innermost layer or the single layer of the tape arrangement.

According to one embodiment, the tape arrangement comprises a swelling layer. Thus, the swelling layer is arranged around the conductor. The swelling layer may be a longitudinally arranged layer arranged along the longitudinal axis of the conductor. The swelling layer is typically configured to swell upon contact with water. That is, the material of the swelling layer is configured to react on contact with water and thereby swell into voids and spaces inside the power cable for sealing against moisture. The swelling layer may e.g. be the previously mentioned first layer, the innermost layer or the single layer of the tape arrangement.

According to one embodiment, the tape arrangement is a multi-layer tape arrangement comprising the first layer being the innermost layer of the tape arrangement, and a second layer arranged radially outside of the first layer. The second layer is typically in direct contact with the first layer. The second layer may, or may not, comprise a friction enhancing material.

According to one embodiment, the multi-layer tape arrangement comprises the winding layer and the swelling layer. Hereby, the winding layer and the swelling layer may be advantageously arranged around the conductor with the first layer, being the innermost layer of the multi-layered tape arrangement, having the inner facing surface coated with the friction enhancing material.

According to one embodiment, the swelling layer is the innermost layer of the tape arrangement. Thus, the swelling layer may comprise the inner facing surface coated with the friction enhancing material. For example, the swelling layer may be arranged radially inside of the previously mentioned winding layer, in a multi-layer tape arrangement. Thus, the winding layer may be arranged to fixate the swelling layer in position. The tape arrangement may thus comprise at least two separate layers, the swelling layer and the winding layer, wherein the swelling layer is the innermost layer.

According to one embodiment, the winding layer is the innermost layer of the tape arrangement. Thus, the winding layer may comprise the inner facing surface coated with the friction enhancing material. For example, the winding layer may be arranged radially inside of the previously mentioned swelling layer in a multi-layer tape arrangement. Thus, the swelling layer may be arranged to fixate the winding layer in position. According to one embodiment, the winding layer is the outermost layer of the tape arrangement.

According to one embodiment, the friction enhancing material comprises at least 25 wt% of a polymer. According to one embodiment, the friction enhancing material comprises at least 50 wt% of a polymer. The polymer may be a copolymer, such as an ethylene based copolymer, e.g. EVA (ethylene-vinyl acetate) e.g. with a VA content of between 10 wt% to 50 wt%, an ethylene acrylic rubber, such as e.g. EEA (ethylene ethyl acrylate) or EBA (ethylene butyl acrylate). The polymer may alternatively be a grafted copolymer, such as a grafted polyethylene, e.g. maleic anhydride grafted polyethylene. The polymer may alternatively be an elastomer, or a rubber, e.g. EPDM (ethylene propylene diene monomer rubber) or EPR (ethylene propylene rubber).

According to one embodiment, the friction enhancing material, typically a polymer based material, comprises carbon black. Hereby, the electrical conductivity of the friction enhancing material can be adapted.

According to one embodiment, the friction coefficient between the coated friction enhancing material and the conductor is at least 0.25. Such friction of coefficient is beneficial for achieving the necessary friction between the conductor, such as an outer facing surface of the conductor, and the tape arrangement. For example, such friction of coefficient is advantageously reducing the shrink back of the power cable. In other words, the friction enhancing material is chosen, considering the material of the conductor, such that the friction coefficient between the coated friction enhancing material and the conductor is at least 0.25.

According to one embodiment, the friction coefficient between the coated friction enhancing material and the conductor is at least 0.30, or at least 035. For example, the friction coefficient between the coated friction enhancing material and the conductor is between 0.25 and 2.0, such as e.g. between 0.30 and 1.5. For example, the friction coefficient between the coated friction enhancing material and the conductor is between 0.25 and 1.0, such as e.g. between 0.30 and 0.95, or between 0.30 and 0.75. For example, for embodiments in which the friction enhancing material is a polymer e.g. copolymer, such as an ethylene based copolymer as previously exemplified, the two surfaces that are in contact, i.e. the coated inner facing surface and the conductor, have an associated interaction that prevents or impedes one surface sliding on the other that is approximately proportional to the force compressing one surface against the other. That is, the microscopic forces involved are the molecular interactions on a microscopic scale between the points of contact between the two surfaces. According to at least one embodiment, the friction enhancing material does not form a chemical bond to the conductor. That is, according to at least one embodiment, the friction enhancing material is not an adhesive.

According to one embodiment, the tape arrangement has an outer facing surface arranged in contact with the insulation system, wherein the friction coefficient between the coated friction enhancing material and the conductor is lower than the friction coefficient between the outer facing surface and the insulation system.

According to one embodiment, the conductor is a profile wire conductor having a central longitudinal axis and comprising stranded individual profile wires arranged in concentric wire layers around the central longitudinal axis. For the profile wire conductor, which is also called a keystone wire conductor, the individual profile wires are shaped such that when the profile wires are stranded in concentric wire layers (by e.g. a stranding machine), a very high filling grade is achieved. Thus, the profile wires combine almost seamlessly to a circular conductor. The stranded individual profile wires may be helically laid along the central longitudinal axis, wherein said friction enhancing material coating of the inner facing surface of the first layer is in contact with an outermost wire layer, and thus follows the lay of the profile wires of the outermost wire layer. Hereby, the friction enhancing material coating extends along the profile wire conductor in the longitudinal direction as well along the circumferential direction of the profile wire conductor, and the increased friction is provided along the longitudinal direction as well as along the circumferential direction.

According to one embodiment, the insulation system comprises a semiconductive layer arranged in contact with the tape arrangement. Thus, the insulation system may comprise the semiconductive layer (or semiconducting conductor shield) arranged closest to the conductor, i.e. closest with regards to the insulation system. Typically, the insulation system further comprises an insulation layer, or an electrically insulation layer, arranged in contact with, and outside of, the semiconductive layer. Optionally, said semiconductive layer is a first semiconductive layer, and the insulation system further comprises a second semiconductive layer (or semiconductive insulation shield) arranged in contact with, and outside of, the insulation layer. Optionally, the power cable, or the insulation system, further comprises one or more outer layers arranged outside of the second semiconductive layer, such as e.g. a metallic shield and/or a sheath or jacketing.

The semiconductive layer(s) and/or the insulation layer may comprise a thermosetting polymer. The thermosetting polymer may for example be XLPE, crosslinked ethylene propylene diene monomer rubber (EPDM), or crosslinked ethylene propylene rubber (EPR). The semiconductive layer(s) typically comprises an electric conductive compound such as e.g. carbon black.

According to one embodiment, the semiconductive layer(s) and/or the insulation layer is/are thermoplastic, i.e. is/are formed of a thermoplastic composition comprising e.g. polypropylene, LDPE and/or LLDPE.

The semiconductive layer(s) and/or the insulation layer may be extruded layers.

According to one embodiment, the insulation system is more than 8 mm thick. For example, the insulation system is between 8 mm and 45 mm thick, such as e.g. between 8.3 mm and 38 mm thick, or between 8.8 mm and 40.5 mm thick. The friction enhancing material coating is particularly efficient for reducing shrink back of the insulation layer for such relative thick insulation systems. For example, the semiconductive layer (or semiconducting conductor shield) is between 0.3 and 3 mm thick and the insulation layer is between 8 mm and 35 mm thick. According to one embodiment, the second semiconductive layer (or semiconductive insulation shield) is between 0.5 and 2.5 mm thick.

According to one embodiment, the tape arrangement has an extension in the radial direction of between 0.05 mm and 1 mm, such as between 0.1 mm and 0.2 mm, or between 0.1 mm and 0.8 mm. In other words, the tape arrangement may be between 0.05 mm and 1 mm thick, or between 0.1 mm and 0.2 mm thick. For embodiments comprising a plurality of tape layers, the innermost tape layer comprises the friction enhancing material on its inner facing surface.

The tape arrangement may be referred to as a conductor tape arrangement. The tape arrangement is typically tightly arranged onto the conductor wherein the friction enhancing material coating is pressed towards the outer surface of the conductor. For example, by referring to the previously mentioned embodiment in which the conductor is a profile wire conductor, the tape arrangement is arranged to fixate the stranded individual profile wires while at the same time provide for the increased friction owing to the friction enhancing material coating.

According to one embodiment, the friction enhancing material coating protrudes radially inwards from the inner facing surface of the first layer. Hereby, the previously mentioned friction between the conductor and the tape arrangement can be further increased.

The power cable may be a high voltage power cable, for example for voltages higher than 72 kV. According to one example, the power cable is a high voltage power cable, or an ultra-high voltage cable, for example for voltages higher than 450 kV, or higher than 550 kV, or higher than 800 kV.

The power cable may be an AC power cable or a DC power cable, such as e.g. a high voltage direct current, HVDC, cable.

According to a second aspect, there is provided a method for producing at least a part of a power cable. The method comprises:
- providing a conductor;
- coating a first surface of a tape arrangement with a friction enhancing material, or coating the conductor with the friction enhancing material;
- arranging the tape arrangement onto the conductor such that the first surface becomes an inner facing surface facing the conductor.

Effects and features of the second aspect are largely analogous to those described above in connection with the first aspect. Embodiments mentioned in relation to the first aspect, in particular with regards to the tape arrangement and the friction enhancing material, are largely compatible with the second aspect. Thus, the friction enhancing material coating will be arranged to be in contact with the conductor, such as the outer facing surface of the conductor. That is, the first surface of the tape arrangement is in contact with the friction enhancing material coating.

According to one embodiment, the coating is performed by spray coating, e.g. spray coating the friction enhancing material onto the first surface of the tape arrangement, or onto the conductor. Alternatively, the coating is performed by extruding a string of the friction enhancing material onto the conductor. According to one embodiment, a first tape layer of the tape arrangement comprising the friction enhancing material coating is first arranged onto the conductor, whereafter a second tape layer of the tape arrangement is arranged onto the first tape layer. The second tape layer may, or may not, comprise a friction enhancing material coating.

According to one embodiment, the method further comprises:
- encasing the tape arrangement with an insulation system.

The insulation system may be that described with reference to the first aspect.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a radial cross section of a power cable of an example embodiment;
Fig. 2 schematically shows a radial cross section of a part of the power cable of Fig. 1 according to an example embodiment;
Fig. 3 schematically shows an enlarged view of the radial cross section of Fig. 2 according to an example embodiment;
Fig. 4 is a side view of a part of the power cable of Fig. 1 according to an example embodiment;
Fig. 5 schematically shows a radial cross section of a part of a power cable according to an example embodiment;
Fig. 6 schematically shows a radial cross section of a conductor and a tape arrangement according to an example embodiment;
Fig. 7 is a perspective view of a profile wire conductor extending along a central longitudinal axis according to an example embodiment;
Fig. 8 is a flow chart describing a method of producing at least a part of a power cable according to example embodiments.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

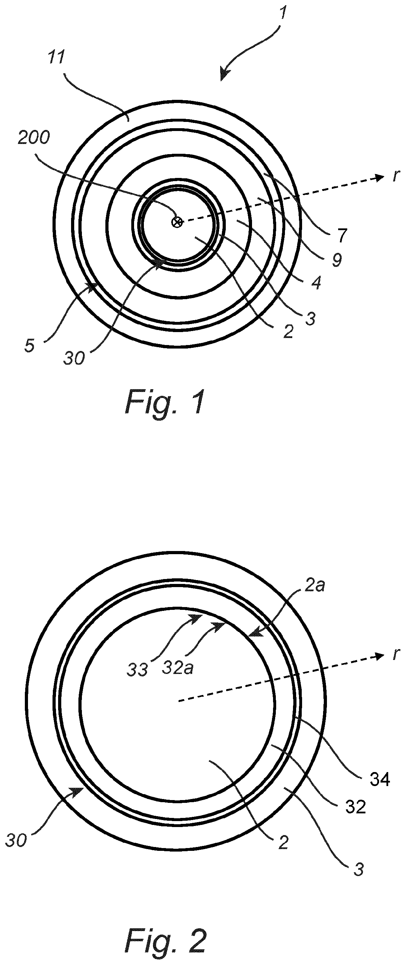

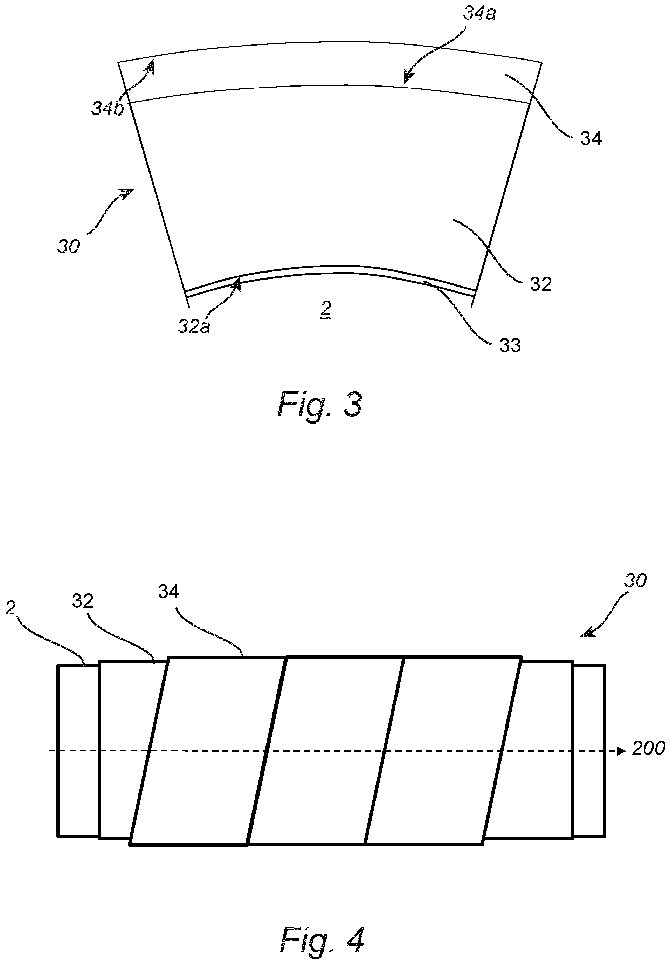

Fig. 1 shows an example of a power cable 1. In Fig. 1, a radial cross section of the power cable 1 is shown. The radial cross section is a cross section in the radial direction r of the power cable 1, i.e. perpendicular to a central longitudinal axis 200 (better shown in Fig. 4). The power cable 1 may e.g. be defined by cylindrical coordinates (by a radial distance r, azimuth φ which is the angle along the circumferential direction, and an axial coordinated along the longitudinal axis 200).

The power cable 1 comprises a conductor 2, an insulation system 5 arranged around the conductor 2 and a tape arrangement 30 forming an interface between the conductor 2 and the insulation system 5.

The insulation system 5 of Fig. 1 comprises a first semiconductive layer (or semiconducting conductor shield) 3 arranged closest to the conductor 2. Moreover, the insulation system 2 comprises an insulation layer (an electrically insulation layer) 4, arranged in contact with, and outside of, the first semiconductive layer 3. The insulation system 5 may further comprise a second semiconductive layer (or semiconductive insulation shield) 9 arranged in contact with, and outside of, the insulation layer 4. Thus, the semiconducting conductor shield 3 may be referred to as an inner semiconductive layer 3 and semiconductive insulation shield 9 may be referred to as an outer semiconductive layer 9.

The power cable 1 may optionally comprise one or more outer layers arranged outside of the insulation system 5, such as e.g. a water barrier 7, e.g. a metallic shield and a sheath or jacketing layer 11.

The semiconductive layer(s) 3, 9 and/or the insulation layer 4 may comprise a thermosetting polymer. The thermosetting polymer may for example be XLPE, crosslinked ethylene propylene diene monomer rubber (EPDM), or crosslinked ethylene propylene rubber (EPR). The semiconductive layer(s) 3, 9 typically comprises an electric conductive compound such as e.g. carbon black.

According to one embodiment, the semiconductive layer(s) 3, 9 and/or the insulation layer 4 is/are thermoplastic, i.e. is/are formed of a thermoplastic composition comprising at least one of polypropylene, LDPE and LLDPE.

Turning to Fig. 2 showing an enlarged view of the conductor 2, the tape arrangement 30 and the semiconducting conductor shield 3 of the insulation system 5, of Fig. 1. In the example embodiment of Fig. 2, the tape arrangement 30 is a multi-layered tape arrangement and comprises two layers 32, 34, a first layer 32 being the innermost layer 32 of the tape arrangement 30 and a second layer 34 being the outermost layer 34 of the tape arrangement 30. The first layer 32 has an inner facing surface 32a arranged to face the conductor 2, and the conductor 2 has an outer facing surface 2a arranged to face the tape arrangement 30. In other words, the inner facing surface 32a of the first layer 32 of the tape arrangement 30 is facing the outer facing surface 2a of the conductor 2. The inner facing surface 32a of the first layer 32 of the tape arrangement 30 may be arranged to be at least partly in contact with outer facing surface 2a of the conductor 2. The inner facing surface 32a is coated with friction enhancing material 33, wherein the friction enhancing material 33 is arranged in contact with the outer facing surface 2a of the conductor 2, better shown in Fig. 3.

Fig. 3 is an enlarged cross sectional view of a part of the conductor 2 and the tape arrangement 30 of Fig. 2. In more detail, the friction enhancing material 33 is coated onto the inner facing surface 32a of the first layer 32 of the tape arrangement 30 and is thus arranged in contact with the outer facing surface 2a of the conductor 2. The coating of the friction enhancing material 33 is here shown as a coherent, or continuous, coating on the inner facing surface 32a, but it may as well be a non-continuous, or an intermittent, coating. Thus, in the intermittent spaces between the coating, the inner facing surface 32 may be in contact with the outer facing surface 2a of the conductor 2, i.e. without the coating of the friction enhancing material 33 arranged in between. As also shown in Fig. 3, the second layer 34 comprises an outer facing surface 34b facing away from the conductor 2, and an inner facing surface 34a facing towards the conductor 2. The inner facing surface 34a of the second layer 34 is in the example of Fig. 3 arranged in contact with the first layer 32.

Fig. 4 is a side view of the conductor 2 and the tape arrangement 30 of Fig. 2. As shown in Fig. 4, the second layer 34 is a winding layer arranged helically around the conductor 2, and the first layer 32 is longitudinally arranged along the longitudinal axis 200 of the conductor 2. The first layer 32 is here preferably a swelling layer being configured to swell upon contact with water. Thus, in the example of Fig. 4, the swelling layer is the innermost layer of the tape arrangement 30 and comprises the coating of the friction enhancing material (not shown in Fig. 4).

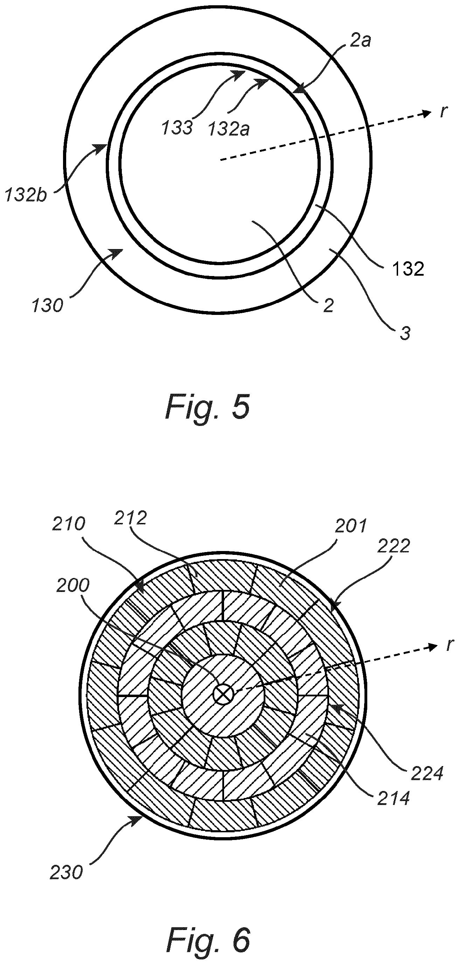

Fig. 5 shows a cross-section of an alternative embodiment of the tape arrangement 130. The tape arrangement 130 of Fig. 4 may be used instead of the tape arrangement 30 in the power cable 1 of Fig. 1.

The tape arrangement 130 comprises a layer corresponding to the previously described first layer. That is, the tape arrangement 130 comprises a first layer 132 having an inner facing surface 132a arranged to face the conductor 2, or the outer surface 2a of the conductor 2. The inner facing surface 132a is coated with the friction enhancing material 133 in a corresponding manner as shown for the tape arrangement 30 of Fig. 3.

Except for the coating of the friction enhancing material 133 (which may or may not be considered as a separate layer of the tape arrangement 130), the first layer 132 is a single layer of the tape arrangement 130 in the example embodiment of Fig. 5.

The first layer 133 of the tape arrangement 130 may either be corresponding to the winding layer or the swelling layer of Fig. 4, or be a combination thereof (i.e. a swelling layer which is arranged helically around the conductor 2). Thus, according to at least one example, the winding layer is the innermost layer of the tape arrangement 130 and comprises the coating of the friction enhancing material 133.

The friction enhancing material coating 33, 133 previously described typically comprise at least 25 wt% of a polymer, or at least 50 wt% of a polymer. Hereby, a friction coefficient between the coated friction enhancing material 33, 133 and the conductor 2 of at least 0.25 can be achieved. Such friction of coefficient is beneficial for achieving the necessary friction between the conductor 2, such as the outer facing surface 2a of the conductor 2, and the tape arrangement 30, 130. For example, such friction of coefficient is advantageously reducing the shrink back of the power cable 1 of Fig. 1. In other words, the friction enhancing material coating interacts with the conductor 2, or the outer facing surface 2a of the conductor. Hereby, friction forces and/or tortional forces between the conductor 2 and the tape arrangement 30, 130, and further the insulation system 5, is increased to reduce axial shrinkage forces. Thus, the friction enhancing material coating 33, 133 reduces the shrink back of the insulation system 5 arranged around the tape arrangement 30, 130 and the conductor 2. The polymer is preferably a copolymer, such as an ethylene based copolymer, e.g. EVA (ethylene-vinyl acetate) e.g. with a VA content of between 10 wt% to 50 wt%, an ethylene acrylic rubber, such as e.g. EEA (ethylene ethyl acrylate) or EBA (ethylene butyl acrylate).

Briefly turning back to Fig. 3, the tape arrangement 30 has an outer facing surface 34b (being the previously mentioned outer facing surface 34b of the second layer 34) arranged in contact with the insulation system, here the first semiconductive layer (shown in Fig. 1). Thus, the tape arrangement 30 comprises an inner facing surface 32a facing the conductor 2, and an outer facing surface 34b facing away from the conductor 2. In the example embodiment of Fig. 5, the first layer 130 has a corresponding outer facing surface 132b. According to one example, the friction coefficient between the coated friction enhancing material 33, 133 and the conductor 2, as previously described, is lower than the friction coefficient between the outer facing surface 34b, 132b and the insulation system. According to one example, the outer facing surface 34b, 132b is at least partly integrated with, e.g. by being at least partly melted into, the insulation system.

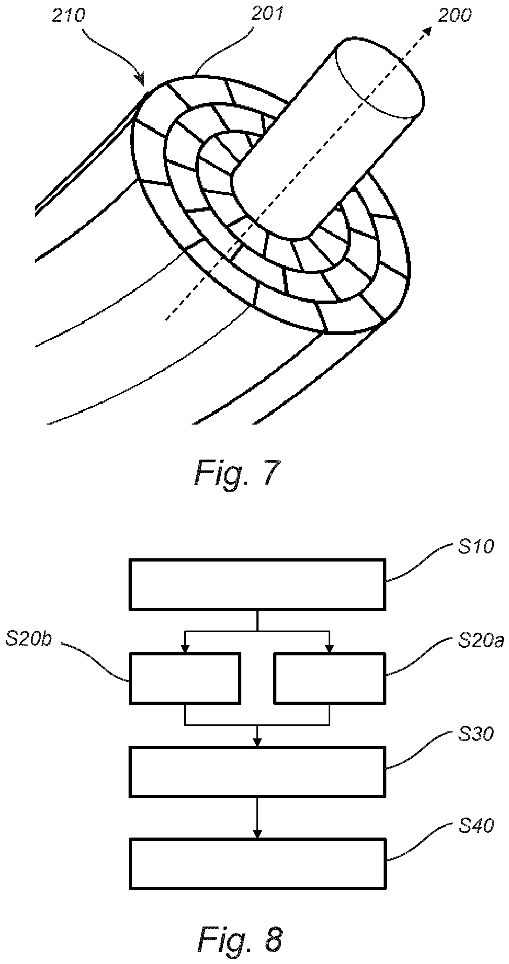

Turning to Figs. 6-7 showing an example embodiment of a conductor 201 being a profile wire conductor 201 having a central longitudinal axis 200 and comprising stranded individual profile wires 210 arranged in concentric wire layers 222, 224 around the central longitudinal axis 200. The stranded individual profile wires 210 is typically arranged helically along the central longitudinal axis 200, as shown in Fig. 7. The conductor 201 of Figs. 6-7 may replace the conductor 2 in the power cable 1 of Fig. 1.

The concentric wire layers of the profile wire conductor 201 comprises at least a first inner wire layer 224 which is formed of profile wires 214 (of which only one is indicated in Fig. 6) having the same radial cross sectional geometry, both in shape and in size, and an outer most wire layer 222 which is formed of profile wires 212 (of which only one is indicated in Fig. 6) having the same radial cross sectional geometry, both in shape and in size. However, the shape and size of the radial cross sectional geometry of the profile wires 214 in the first inner wire layer 224 compared to the profile wires 212 in the outermost wire layer 222 may be the same, or different. The profile wire conductor 201 may comprises more than one inner wire layer. That is, the profile wire conductor 201 may comprise a plurality of inner wire layers arranged concentrically inside of the outermost wire layer 222. As seen in Figs. 6-7, the profile wire conductor 201 comprises a centre wire having a circular radial cross sectional shape. Thus, the inner wire layer 224, or plurality of inner wire layers, are arranged in between the centre wire and the outermost wire layer 222.

As shown in Fig. 6, a tape arrangement 230, which may be the same as the tape arrangement 30, 130 previously described, is arranged around the conductor 201, with the advantageous effects as previously described. Thus, the friction enhancing material coating of the inner facing surface of the first layer of the tape arrangement 230 maybe arranged in contact with the outermost wire layer 222, and thus follow the lay of the profile wires 212 of the outermost wire layer 222. Hereby, the friction enhancing material coating extends along the profile wire conductor 201 in the longitudinal direction as well along the circumferential direction of the profile wire conductor 201, and the increased friction is provided along the longitudinal direction as well as along the circumferential direction.

A method of producing at least a part of a power cable, such as the power cable 1 of Fig. 1 will now be described with reference to the flow chart of Fig. 8.

In a first step, S10, a conductor is provided. The conductor may the conductor 2 of Figs. 1-5, or conductor 201 of Figs. 6-7.

In a first optional second step, S20a, a first surface of a tape arrangement is coated with a friction enhancing material. In a second optional second step S20b, the conductor is coated with the friction enhancing material. The tape arrangement may be any one of the tape arrangements 30, 130, 230 described with reference to Figs. 1-6.

In a third step, S30, the tape arrangement is arranged onto the conductor such that the first surface becomes an inner facing surface facing the conductor. Thus, as the first surface of the tape arrangement is an inner facing surface, such as the innermost inner facing surface of the tape arrangement, the friction enhancing material may be coated onto the tape arrangement when arranging the tape arrangement onto the conductor. That is, the coating of the friction enhancing material may be a shared coating between the conductor and the tape arrangement. Thus, the friction enhancing material coating will be arranged to be in contact with the conductor, such as the outer facing surface of the conductor, as previously described, and in contact with the first surface of the tape arrangement.

In a fourth, optional step, S40, the tape arrangement is encased with an insulation system. The insulation system may be the insulation system 5 described with reference to Fig. 1, or it may comprise at least one of the previously mentioned layers: first semiconductive layer (or semiconducting conductor shield), insulation layer (an electrically insulation layer) and second semiconductive layer (or semiconductive insulation shield). The layers of the insulation system is preferably extruded onto the conductor and tape arrangement.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A power cable (1) comprising:
a conductor (2, 201),
an insulation system (5) arranged around the conductor (2, 201),
a tape arrangement (30, 130) forming an interface between the conductor (2, 201) and the insulation system (5), the tape arrangement (30, 130) having one or several layers (32, 34,132) of which a first layer (32, 132) has an inner facing surface (32a, 132a) arranged to face the conductor (2, 201),
wherein the inner facing surface (32a, 132a) of the first layer (32, 132) of the tape arrangement (30, 130) is coated with friction enhancing material (33, 133).

2. The power cable (1) according to claim 1, wherein the first layer (32, 132) of the tape arrangement (30, 130) is an innermost layer of the tape arrangement (30,130).

3. The power cable (1) according to any one of the preceding claims, wherein the tape arrangement (30, 130) comprises a winding layer (34, 132) arranged helically around the conductor (2, 201).

4. The power cable (1) according to any one of the preceding claims, wherein the tape arrangement (30) comprises a swelling layer (34).

5. The power cable (1) according to claims 2-4, wherein the swelling layer (34) is the innermost layer of the tape arrangement (30).

6. The power cable (1) according to claims 2-5, wherein the winding layer (132) is the outermost layer of the tape arrangement (130).

7. The power cable (1) according to any one of the preceding claims, wherein the tape arrangement is a multi-layer tape arrangement comprising the first layer being the innermost layer of the tape arrangement, and a second layer arranged radially outside of the first layer.

8. The power cable (1) according to claims 3-4 and claim 7, wherein the multi-layer tape arrangement comprises the winding layer and the swelling layer.

9. The power cable (1) according to any one of the preceding claims, wherein the friction enhancing material (33, 133) comprises at least 25 wt% of a polymer.

10. The power cable (1) according to any one of the preceding claims, wherein the friction coefficient between the coated friction enhancing material (33, 133) and the conductor (2, 201) is at least 0.25.

11. The power cable (1) according to any one of the preceding claims, wherein the tape arrangement (30, 130) has an outer facing surface (34b, 132b) arranged in contact with the insulation system (5), and wherein the friction coefficient between the coated friction enhancing material (33, 133) and the conductor (2, 201) is lower than the friction coefficient between the outer facing surface (34b, 132b) and the insulation system (5).

12. The power cable (1) according to any one of the preceding claims, wherein the conductor (201) is a profile wire conductor having a central longitudinal axis (200) and comprising stranded individual profile wires (210, 212) arranged in concentric wire layers (222, 224) around the central longitudinal axis (200).

13. The power cable (1) according to any one of the preceding claims, wherein the insulation system (5) comprises a semiconductive layer (3) arranged in contact with the tape arrangement (30, 130).

14. A method for producing at least a part of a power cable, the method comprising:
- providing (S10) a conductor (2, 201);
- coating (S20a) a first surface of a tape arrangement (30, 130) with a friction enhancing material (33, 133), or coating (S20b) the conductor (2, 201) with the friction enhancing material (33, 133);
- arranging (S30) the tape arrangement onto the conductor such that the first surface becomes an inner facing surface (32a, 132a) facing the conductor (2, 201).

15. The method according to claim 14, further comprising:
- encasing (S40) the tape arrangement (30, 130) with an insulation system (5).
